# EUROPÄISCHE PATENTSCHRIFT

(11) **EP 3 760 872 B1**
(45) Veröffentlichungstag und Bekanntmachung des Hinweises auf die Patenterteilung: **08.06.2022**
(21) Anmeldenummer: 20183950.3
(22) Anmeldetag: 03.07.2020
(51) Int. Cl.: F04D 19/04, F04D 29/52, F04D 29/64, F16B 5/02

(54) **VAKUUMPUMPE MIT BEFESTIGUNGSVORKEHRUNG ZUR ANBRINGUNG DER PUMPE AN EINER BEFESTIGUNGSSTRUKTUR SOWIE PUMPSTAND MIT SOLCH EINER DARAN ANGEBRACHTEN VAKUUMPUMPE**
VACUUM PUMP WITH ATTACHMENT MEANS FOR MOUNTING THE PUMP TO A MOUNTING STRUCTURE AND PUMP STAND WITH SUCH A MOUNTED VACUUM PUMP
POMPE À VIDE POURVUE D'UN AGENCEMENT DE FIXATION DESTINÉ À L'APPLICATION DE LA POMPE À UNE STRUCTURE DE FIXATION AINSI QU'UN POSTE DE POMPAGE DOTÉ D'UNE TELLE POMPE À VIDE MONTÉE SUR CELUI-CI

(43) Veröffentlichungstag der Anmeldung: 06.01.2021
(73) Patentinhaber: Pfeiffer Vacuum Technology AG, 35614 Asslar (DE)
(72) Erfinder: Tatzber, Bernhard, 35305 Grünberg (DE); Wolff, Nikolai, 35764 Sinn-Fleisbach (DE)
(74) Vertreter: Manitz Finsterwald Patent- und Rechtsanwaltspartnerschaft mbB

(56) Entgegenhaltungen:
- FR-A1- 2 611 818
- JP-A- H10 299 774
- US-A1- 2013 115 074
- Fredrik Rambris: "Two screws in one hole", Youtube, 28. Mai 2015 (2015-05-28), Seite 1 pp., XP054981121, Gefunden im Internet: URL:https://www.youtube.com/watch?v=gRXJ3C gjd88 [gefunden am 2020-11-19]

## Beschreibung

Die Erfindung betrifft eine Vakuumpumpe, insbesondere eine Turbomolekularpumpe, mit einer Befestigungsvorkehrung zur Anbringung der Pumpe an einer Befestigungsstruktur sowie einen Pumpstand mit solch einer daran angebrachten Vakuumpumpe.

Zur stehenden, hängenden oder wie auch immer gearteten Anbringung einer Vakuumpumpe an einer Befestigungsstruktur wie beispielsweise einem Träger können Befestigungsschrauben zum Einsatz kommen, die sich durch die Befestigungsstruktur von unten hindurch erstrecken und in die Unterseite des Gehäuses der Vakuumpumpe eingeschraubt werden, wozu in der Unterseite der Vakuumpumpe entsprechende Gewindeöffnungen zur Aufnahme des Gewindeschafts der Befestigungsschrauben vorgesehen werden müssen.

Insbesondere bei verhältnismäßig kleinen Vakuumpumpen steht jedoch für derartige Gewindeöffnungen an der Unterseite des Gehäuses nur verhältnismäßig wenig Platz zur Verfügung. Dementsprechend kann ein Ansatz darin bestehen, die Anzahl der Befestigungsschrauben und/oder deren Durchmesser zu reduzieren. Dieser Ansatz kann sich jedoch als problematisch erweisen, da mit kleineren Befestigungsschrauben und/oder mit einer geringeren Anzahl an Befestigungsschrauben das im Fehlerfall der Vakuumpumpe unter Umständen auftretende Crashmoment nicht mehr zuverlässig auf die Befestigungsstruktur übertragen werden kann.

Verschärft wird das zuvor beschriebene Platzproblem zur Unterbringung der benötigten Gewindeöffnungen in bzw. an der Unterseite des Gehäuses bei Vakuumpumpen, wenn das Gehäuse der Vakuumpumpe mehrteilig ausgebildet ist und insbesondere ein erstes Gehäuseteil in Form beispielweise eines Gehäuseunterteils umfasst, das in einem zweiten Gehäuseteil mit Hilfe von Schrauben befestigt ist, die von der Unterseite des Gehäuseunterteils in darin ausgebildete Stufenbohrungen eingeführt werden, wobei der Schraubenschaft jeder dieser Schrauben in Gewindebohrungen in dem zweiten Gehäuseteil eingeschraubt wird. Aufgrund der Stufenbohrungen, die sich zur Aufnahme der in Rede stehenden Schrauben von der Unterseite in das Gehäuseunterteil erstrecken, steht bei derartigen Vakuumpumpen mit mehrteiligem Gehäuse an der Unterseite noch weniger Platz zur Ausbildung von Gewindeöffnungen zur Aufnahme von Befestigungsschrauben zur Verfügung, mittels derer eine derartige Vakuumpumpe stehend an einer Befestigungsstruktur wie beispielsweise einem Träger gesichert werden kann.

Eine derartige Vakuumpumpe ist z.B. in der JP H10 299774 A offenbart.

Der Erfindung liegt die Aufgabe zugrunde, zumindest eine Realisierung anzugeben, die es ermöglicht, ein mehrteiliges Gehäuse einer Vakuumpumpe selbst bei beengten Platzverhältnissen sicher an einer anderen Struktur anbringen zu können, so dass beispielweise Crashmomente zuverlässig auf die Struktur übertragen werden können.

Diese Aufgabe wird mit einer Vakuumpumpe, insbesondere mit einer Turbomolekularpumpe gelöst, die die Merkmale des Anspruchs 1 aufweist.

Die erfindungsgemäße Vakuumpumpe umfasst ein mehrteiliges Gehäuse zur Aufnahme wenigstens eines um eine Rotationsachse drehbaren Pumpmechanismus, wobei das Gehäuse ein erstes Gehäuseteil und ein zweites Gehäuseteil umfasst, das insbesondere in axialer Richtung an das erste Gehäuseteil angrenzt. Durch das erste Gehäuseteil erstreckt sich insbesondere in axialer Richtung zumindest eine Stufenbohrung hindurch, die einen ersten Bohrungsabschnitt, einen zweiten Bohrungsabschnitt, der einen kleineren Durchmesser als der erste Bohrungsabschnitt aufweist, und eine Ringschulter zwischen den beiden Bohrungsabschnitten aufweist. Jede dieser Stufenbohrungen nimmt dabei eine Schraube mit einem Schraubenkopf und einem Schraubenschaft auf, wobei sich der Schraubenschaft durch den zweiten Bohrungsabschnitt erstreckt und mit seinem freien Ende in eine Gewindebohrung eingeschraubt ist, die in dem zweiten Gehäuseteil ausgebildet ist, wohingegen sich der Schraubenkopf an der Ringschulter der Stufenbohrungen abstützt. Erfindungsgemäß ist es dabei vorgesehen, dass der erste Bohrungsabschnitt der Stufenbohrung ein Innengewinde zur Einschraubung eines Gewindeschafts einer Befestigungsschraube enthält, die zur Anbringung des ersten Gehäuseteils an beispielsweise einer Befestigungsstrukturdient.

Bei dem ersten Gehäuseteil kann es sich beispielsweise um ein Gehäuseunterteil handeln, das eine umlaufende Gehäusewand umfasst, die sich in axialer Richtung erstreckt und eine umlaufende Stirnfläche sowie eine der Stirnfläche in axialer Richtung gegenüberliegende Bodenfläche aufweist, die die Unterseite der Vakuumpumpe bildet. In entsprechender Weise kann auch das zweite Gehäuseteil eine umlaufende Gehäusewand umfassen, die sich in axialer Richtung erstreckt und ebenfalls eine umlaufende Stirnfläche ausbildet. Somit kann die Stirnfläche des zweiten Gehäuseteils an die Stirnfläche des ersten Gehäuseteils angrenzen, wobei die beiden Gehäuseteile mittels der Schrauben, deren Schraubenschaft von dem jeweiligen zweiten Bohrungsabschnitt der Stufenbohrungen aufgenommen werden, mit ihren jeweiligen Stirnflächen gegeneinander verspannt werden.

Die Stufenbohrungen sind dabei innerhalb bzw. im Inneren der Gehäusewand des ersten Gehäuseteils ausgebildet und erstrecken sich zwischen der Bodenfläche und der Stirnfläche des ersten Gehäuseteils, was bedeutet, dass das erste Gehäuseteil in axialer Richtung von den in Rede stehenden Stufenbohrungen durchsetzt ist. Insbesondere kann es dabei vorgesehen sein, dass der erste Bohrungsabschnitt in der Bodenfläche mündet bzw. daran endet und dass der zweite Bohrungsabschnitt in der Stirnfläche des ersten Gehäuseteils mündet bzw. daran endet. Der erste Bohrungsabschnitt, der einen größeren Durchmesser als der zweite Bohrungsabschnitt aufweist, grenzt somit also unmittelbar an die Bodenfläche des Gehäuseunterteils an, so dass dieser erste Bohrungsabschnitt in der gewünschten Weise einen Gewindeschaft aufnehmen kann, mittels dessen sich das erste Gehäuseteil an einer Befestigungsstruktur anbringen lässt.

Erfindungsgemäß ist es somit also vorgesehen, dass die Stufenbohrungen, die in dem ersten Gehäuseteil ausgebildet sind, nicht nur zur Aufnahme der Schrauben dienen, mittels derer das erste Gehäuseteil an dem zweiten Gehäuseteil befestigt wird; vielmehr dienen die Stufenbohrungen gleichermaßen zur Aufnahme eines jeweiligen Gewindeschafts beispielsweise einer Befestigungsschraube, mittels derer das erste Gehäuseteil und damit die Vakuumpumpe in ihrer Gesamtheit an beispielweise einer Befestigungsstruktur angeschraubt werden kann. Hierzu ist es lediglich erforderlich, in dem ersten Bohrungsabschnitt der jeweiligen Stufenbohrung ein Innengewinde vorzusehen, in das der Gewindeschaft der Befestigungsschraube zur Anbringung des ersten Gehäuseteils an der Befestigungsstruktur eingeschraubt werden kann.

Den in Rede stehenden Stufenbohrungen kommt somit eine Doppelfunktion zu: zum einen dienen die Stufenbohrungen zur Aufnahme jeweiliger Schrauben, mittels derer das erste Gehäuseteil an dem zweiten Gehäuseteil der Vakuumpumpe befestigt wird. Zum anderen dienen die Stufenbohrungen zur Aufnahme der Gewindeschäfte jeweiliger Befestigungsschrauben, mittels derer das erste Gehäuseteil und damit die Pumpe in ihrer Gesamtheit an beispielweise einer Befestigungsstruktur befestigt werden kann. Hierzu ist in dem ersten Bohrungsabschnitt der jeweiligen Stufenbohrung lediglich ein Innengewinde vorzusehen, in das der jeweilige Gewindeschaft eingeschraubt werden kann.

Aufgrund der Tatsache, dass den Stufenbohrungen erfindungsgemäß die beschriebene Doppelfunktion zukommt, werden somit keine zusätzlichen Gewindeöffnungen an dem ersten Gehäuseteil benötigt, in die entsprechende Gewindeschäfte zur Anbringung der Pumpe an beispielweise einer Befestigungsstruktur eingeschraubt werden können. Vielmehr werden die ohnehin bereits vorhandenen Stufenbohrungen zur Einschraubung von Gewindeschäften nutzbar gemacht, mittels derer es die Vakuumpumpe an beispielweise einer Befestigungsstruktur zu befestigen gilt.

Aufgrund der Tatsache, dass die bereits ohnehin vorhandenen Stufenbohrungen als Aufnahme für entsprechende Gewindeschäfte zur Anbringung der Pumpe an beispielweise einer Befestigungsstruktur genutzt werden, werden somit keine gesonderten Gewindeöffnungen zur Aufnahme entsprechender Befestigungsschrauben benötigt. Insofern wird das zuvor beschriebene Platzproblem hinsichtlich der Bereitstellung entsprechender Gewindeöffnungen dadurch gelöst, dass die bereits ohnehin vorhandenen Stufenbohrungen zur Aufnahme entsprechender Gewindeschäfte zur Anbringung des ersten Gehäuseteils an beispielweise einer Befestigungsstruktur nutzbar gemacht werden. Zur Befestigung der Vakuumpumpe in einer Befestigungsstruktur können somit nicht nur Befestigungsschrauben in einer hinreichend großen Anzahl zum Einsatz kommen; vielmehr können die hierzu benötigten Befestigungsschrauben einen hinreichend großen Gewindeschaftdurchmesser aufweisen, da der erste Bohrungsabschnitt der jeweiligen Stufenbohrung, der den jeweiligen Gewindeschaft aufnimmt, naturgemäß einen größeren Durchmesser als der zweite Bohrungsabschnitt der Stufenbohrung aufweist. Es können somit hinreichend viele Befestigungsschrauben mit einem verhältnismäßig dicken Gewindeschaft zur Befestigung der Vakuumpumpe an beispielweise einer Befestigungsstruktur zum Einsatz kommen, wodurch sichergestellt werden kann, dass im Fehlerfall unter Umständen auftretende Crashmomente zuverlässig auf die Befestigungsstruktur übertragen werden können.

Im Folgenden wird nun auf weitere Ausführungsformen der erfindungsgemäßen Pumpe eingegangen, wobei sich die weitere Ausführungsformen lediglich aus den abhängigen Ansprüchen ergeben. So kann es gemäß einer Ausführungsform vorgesehen sein, dass der erste Bohrungsabschnitt selbst das Innengewinde zur Einschraubung eines Gewindeschafts ausbildet. Mit anderen Worten weist also der erste Bohrungsabschnitt eine Innenumfangsoberfläche auf, in die das Innengewinde beispielsweise eingeschnitten ist bzw. wird.

Alternativ hierzu kann das Innengewinde durch eine Gewindehülse gebildet werden, die von dem ersten Bohrungsabschnitt aufgenommen wird. Beispielsweise kann die Gewindehülse in dem ersten Bohrungsabschnitt mittels einer Press- bzw. Übermaßpassung gesichert werden. Zusätzlich oder alternativ hierzu kann die Gewindehülse in dem ersten Bohrungsabschnitt mittels einer Schraube, insbesondere einer Madenschraube, gesichert werden, die in eine sich radial erstreckende Schrauböffnung in das erste Gehäuseteil eingeschraubt wird. Zusätzlich oder alternativ hierzu kann es ferner vorgesehen sein, dass die Gewindehülse in den ersten Bohrungsabschnitt eingeschraubt wird, wobei sie vorzugsweise gegen den Schraubenkopf der Schraube verspannt wird, mittels derer das erste Gehäuseteil an dem zweiten Gehäuseteil gesichert wird. Insbesondere kann es dabei vorgesehen sein, dass die Gewindehülse ein Außengewinde aufweist, mit dem sie in ein Innengewinde eingeschraubt wird, das die Innenumfangsoberfläche des ersten Bohrungsabschnitts ausbildet.

Gemäß einer weiteren Ausführungsform kann es vorgesehen sein, dass die Länge des ersten Bohrungsabschnitts, insbesondere die Länge des Innengewindes, zumindest etwa doppelt so groß ist, wie der Durchmesser des ersten Bohrungsabschnitts. Insbesondere kann es dabei vorgesehen sein, dass die Länge des ersten Bohrungsabschnitts, insbesondere die Länge des Innengewindes, etwa 2,5 bis 3-mal so groß ist wie der Durchmesser des ersten Bohrungsabschnitts. Über die von den ersten Bohrungsabschnitten aufzunehmenden Gewindeschäfte können somit nicht nur Crashmomente, sondern auch abhebende Lasten zuverlässig auf beispielweise eine Befestigungsstruktur übertragen werden.

Gemäß einem weiteren Aspekt der vorliegenden Erfindung wird ferner ein Pumpstand mit einer Befestigungsstruktur zur Anbringung und Lagerung einer Vakuumpumpe und mit einer Vakuumpumpe vorgeschlagen, wie sie zuvor beschrieben wurde. Die Befestigungsstruktur trägt dabei die Vakuumpumpe, wobei diese an der Befestigungsstruktur mittels einer Befestigungsschraube gesichert ist, deren Gewindeschaft in das Innengewinde des ersten Bohrungsabschnitts eingeschraubt ist.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C, und
- Fig. 6: eine Querschnittsansicht im Übergangsbereich zwischen dem Gehäuseunterteil und dem daran angrenzenden Gehäuseteil.

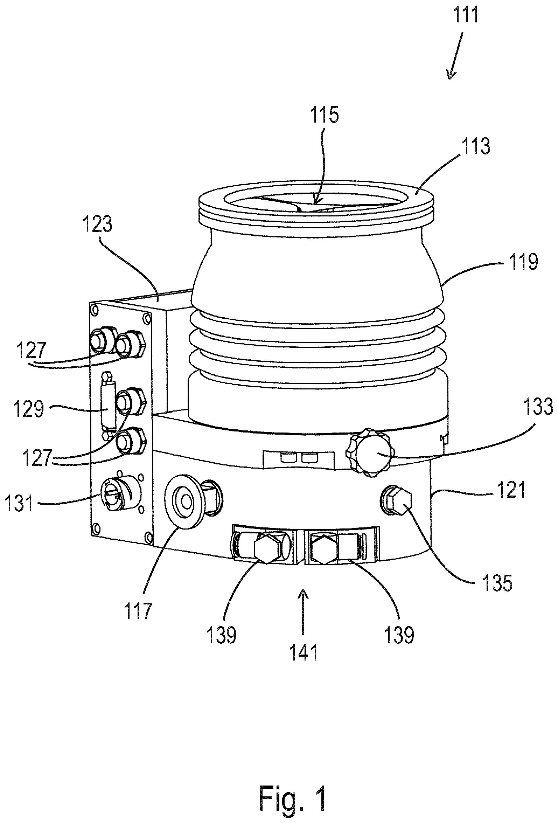

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

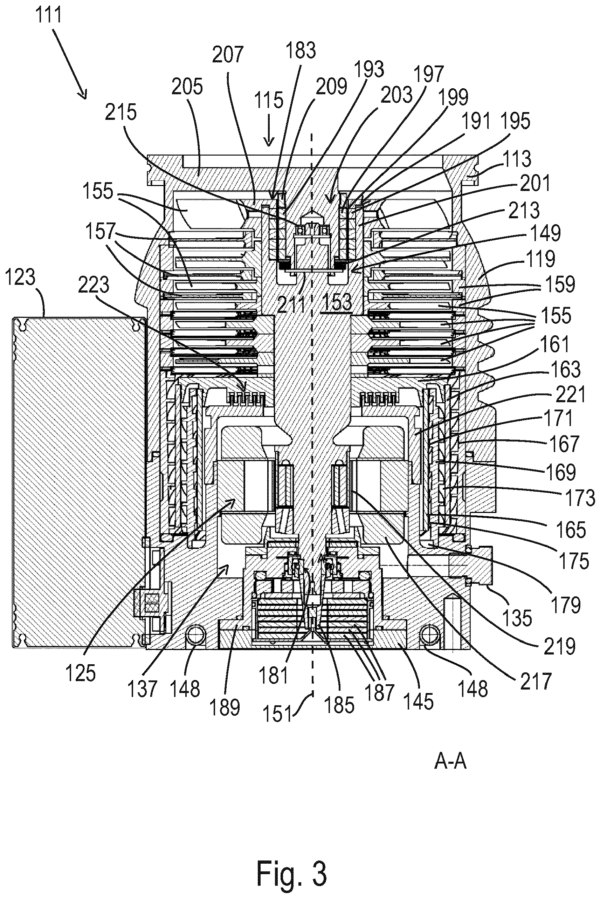

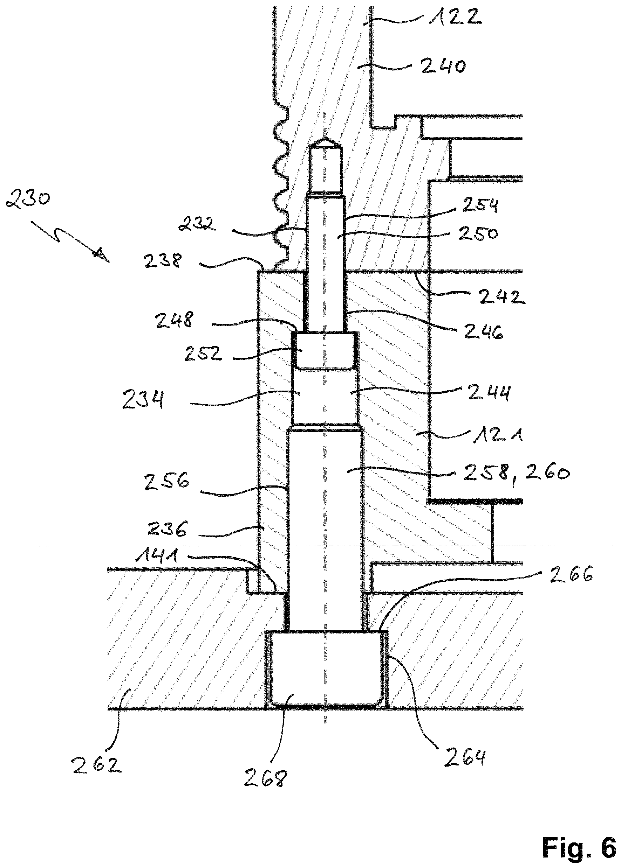

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein hier auch als erstes Gehäuseteil bezeichnetes Unterteil 121, an welchem seitlich ein Elektronikgehäuse 123 angeordnet ist, und ein mit dem Gehäuseunterteil 121 verbundenes zweites Gehäuseteil 122 (siehe Fig. 6), das hier auch als Zwischenstück 122 bezeichnet wird. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

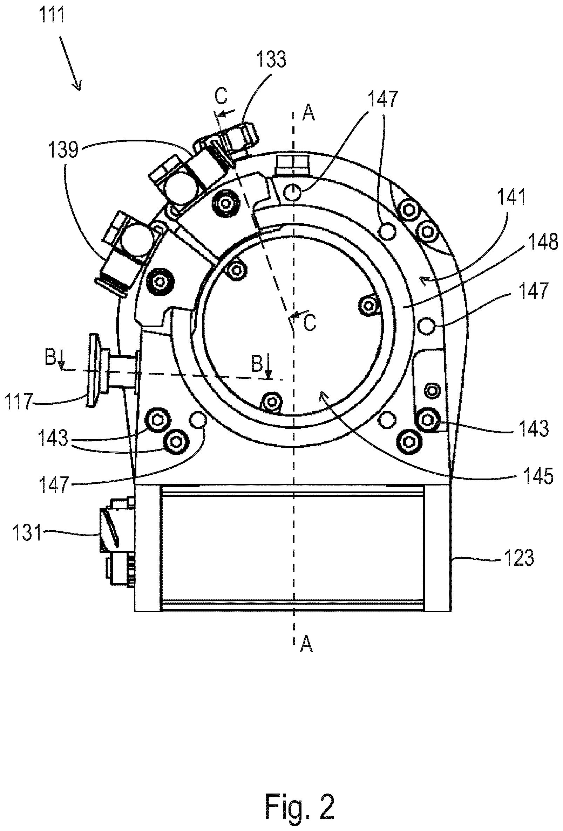

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

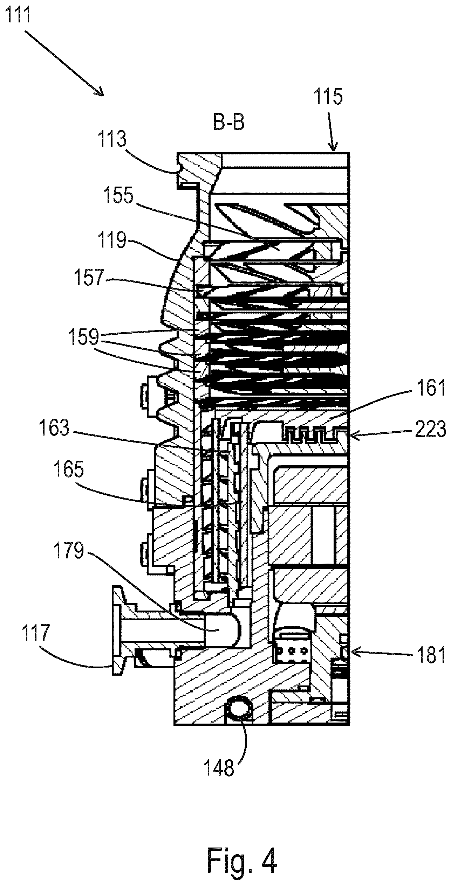

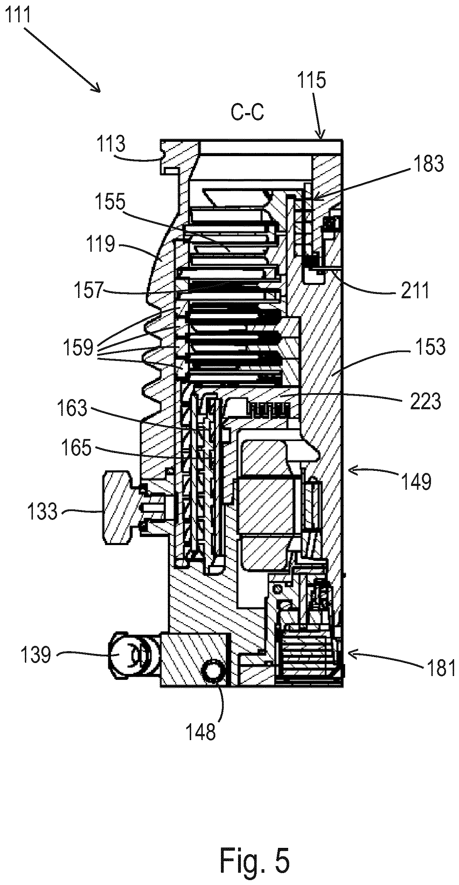

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Im Folgenden wird nun unter Bezugnahme auf die Fig. 6 auf die erfindungsgemäße Ausgestaltung des ersten Gehäuseteils 121 bzw. des Gehäuseunterteils 121 und insbesondere auf die Ausgestaltung der darin ausgebildeten Stufenbohrungen 234 eingegangen.

Die Turbomolekularpumpe 230, von der in der Fig. 6 nur ein Ausschnitt des Gehäuses 119 im Übergangsbereich zwischen dem Gehäuseunterteil 121 und dem daran angrenzenden Zwischenstück 122 im Querschnitt gezeigt ist, unterscheidet sich von der Turbomolekularpumpe 111, wie sie zuvor unter Bezugnahme auf die Fig. 1 bis 5 beschrieben wurde, unter anderem dadurch, dass bei der Turbomolekularpumpe 230 der Fig. 6 keine Holweckpumpstufen im Übergangsbereich zwischen dem Gehäuseunterteil 121 und dem Zwischenstück 122 vorgesehen sind, was jedoch für die vorliegenden Erfindung ohne Bedeutung ist. Vielmehr sind an dieser Stelle die beiden Gehäuseteile - Gehäuseunterteil 121 und Zwischenstück 122 - über eine Schraube 232 wie beispielsweise eine Innensechskantschraube oder eine Schraube mit Innensechsrund-Kopf miteinander verbunden.

Das Gehäuseteil 121 weist dabei eine umlaufende Gehäusewand 236 auf, die sich in Bezug auf die Rotationsachse 151 in axialer Richtung erstreckt und eine umlaufende Stirnfläche 238 sowie eine der Stirnfläche 238 in axialer Richtung gegenüberliegende Bodenfläche 141 aufweist, die gleichermaßen die Unterseite 141 des Pumpengehäuse 119 bildet. Auch das zweite Gehäuseteil bzw. das Zwischenstück 122 weist eine umlaufende Gehäusewand 240 auf, die sich in Bezug auf die Rotationsachse 151 in axialer Richtung erstreckt und eine umlaufende Stirnfläche 242 besitzt. Die beiden Gehäuseteile 121, 122 grenzen dabei derart aneinander an, dass die Stirnfläche 242 des Zwischenstücks 122 an der Stirnfläche 238 des Gehäuseunterteils 121 anliegt. Die beiden Gehäuseteile 121, 122 sind dabei über mehrere Schrauben 232 miteinander verbunden, von denen hier jedoch nur eine dargestellt ist.

Jede dieser Schraube 232 wird dabei zum Teil von einer Stufenbohrung 234 aufgenommen, die in der Gehäusewand 236 des Gehäuseunterteils 121 ausgebildet ist und sich zwischen der Bodenfläche bzw. der Unterseite 141 und der Stirnfläche 238 des Gehäuseunterteils 221 erstreckt. Die Stufenbohrung 234 erstreckt sich in Bezug auf die Rotationsachse 151 in axialer Richtung der Rotationsachse 151 des von dem Gehäuse 119 aufgenommenen Pumpmechanismus und umfasst einen ersten Bohrungsabschnitt 244, der in der Bodenfläche 141 mündet bzw. daran endet, und einen zweiten Bohrungsabschnitt 246, der in der Stirnfläche 238 des Gehäuseunterteils 121 mündet bzw. daran endet. Der erste Bohrungsabschnitt 244 weist dabei einen größeren Durchmesser als der zweite Bohrungsabschnitt 246 auf, was zur Folge hat, dass die Stufenbohrung 234 im Übergangsbereich zwischen den beiden Bohrungsabschnitten 244, 246 eine ringförmig umlaufende Stufe bzw. eine Ringschulter 248 ausbildet.

Der Schraubenschaft 250 der Schraube 232 erstreckt sich dabei durch den zweiten Bohrungsabschnitt 246, wobei das freie Ende des Schraubenschafts 250 in eine in der Gehäusewand 240 des Zwischenstücks 122 ausgebildete Gewindebohrung 254 eingeschraubt ist. Der Schraubenkopf 252 der Schraube 232 stützt sich hingegen an der Ringschulter 248 der Stufenbohrung 234 ab, so dass die beiden Gehäuseteile 121, 122 gegeneinander verspannt werden, wenn die Schraube 232 angezogen wird.

Erfindungsgemäß ist es vorgesehen, dass der erste Bohrungsabschnitt 244 der Stufenbohrung 234 ein Innengewinde 256 enthält, in das der Gewindeschaft 258 einer Befestigungsschraube 260 eingeschraubt werden kann, um so das Gehäuseunterteil 221 und somit die gesamte Pumpe 230 an einer Befestigungsstruktur 262 anbringen zu können.

Konkret ist es bei der hier dargestellten Ausführungsform vorgesehen, dass der erste Bohrungsabschnitt 244 selbst das Innengewinde 256 ausbildet, wozu in die Innenumfangsoberfläche des ersten Bohrungsabschnitts 244 das Innengewinde 256 eingeschnitten ist. Alternativ hierzu kann das Innengewinde auch beispielsweise durch eine Gewindehülse gebildet werden, die der erste Bohrungsabschnitt 244 aufnimmt und die darin beispielsweise mittels einer Madenschraube gesichert ist.

Bei der hier dargestellten Ausführungsform entspricht die Länge des Innengewindes 256 etwa dem 2,5- bis 3-fachen des Durchmessers des ersten Bohrungsabschnitts 244 bzw. des Gewindeschafts 258 der Befestigungsschraube 260, wodurch sich die Turbomolekularpumpe 230 an der Befestigungsstruktur 262 zuverlässig gegen abhebende Kräfte sichern lässt. Hierzu erstreckt sich die Befestigungsschraube 260 durch eine in der Befestigungsstruktur 262 ausgebildete Stufenbohrung 264, wobei sie mit ihrem Gewindeschaft 258 in das Innengewinde 256 des ersten Bohrungsabschnitts 244 der Stufenbohrung 234 eingeschraubt ist, die in der Gehäusewand 236 des Gehäuseunterteils 121 ausgebildet ist. Der Schraubenkopf 268 der Befestigungsschraube 260 stützt sich hingegen an der Ringschulter 266 der Stufenbohrung 264 ab, so dass die Unterseite 141 des Gehäuseunterteils 121 und damit die gesamte Pumpe 230 gegen die Befestigungsstruktur 262 verspannt wird, wenn die Befestigungsschraube 260 angezogen wird.

Da die Befestigungsschraube 262 in dieselbe Stufenbohrung 234 eingeschraubt wird, die auch zur Aufnahme der Schraube 232 dient, mittels derer die beiden Gehäuseteile 221, 222 miteinander verbunden werden, wird in dem Gehäuseunterteil 121 bzw. an dessen Unterseite 141 kein zusätzlicher Platz zur Bereitstellung von Gewindeöffnungen benötigt, in die die Befestigungsschraube 260 eingeschraubt werden kann.

Es können somit hinreichend viele Befestigungsschrauben 260 verwendet werden, um die Turbomolekularpumpe 230 an der Befestigungsstruktur 262 zu sichern, wobei diese Befestigungsschrauben 260 darüber hinaus einen relativ großen Schaftdurchmesser aufweisen können, da der erste Bohrungsabschnitt 244 der Stufenbohrung 234 naturgemäß einen größeren Durchmesser als der zweite Bohrungsdurchmesser 246 aufweist. Im Fehlerfall auftretende Crashmomente können somit über die Befestigungsschrauben 260 zuverlässig auf die Befestigungsstruktur 262 übertragen werden.

### Bezugszeichenliste

- 111: Turbomolekularpumpe
- 113: Einlassflansch
- 115: Pumpeneinlass
- 117: Pumpenauslass
- 119: Gehäuse
- 121: erstes Gehäuseteil, Gehäuseunterteil
- 122: zweites Gehäuseteil, Zwischenstück
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite, Bodenfläche
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 230: Turbomolekularpumpe
- 232: Schraube
- 234: Stufenbohrung
- 236: Gehäusewand von 121
- 238: Stirnfläche von 121
- 240: Gehäusewand von 122
- 242: Stirnfläche von 122
- 244: erster Bohrungsabschnitt
- 246: zweiter Bohrungsabschnitt
- 248: Ringschulter
- 250: Schraubenschaft
- 252: Schraubenkopf
- 254: Gewindebohrung
- 256: Innengewinde
- 258: Gewindeschaft
- 260: Befestigungsschraube
- 262: Befestigungsstruktur
- 264: Stufenbohrung
- 266: Ringschulter
- 268: Schraubenkopf

## Patentansprüche

1. Vakuumpumpe (111, 230), insbesondere Turbomolekularpumpe (111, 230), mit einem Gehäuse (119) zur Aufnahme wenigstens eines um eine Rotationsachse (151) drehbaren Pumpmechanismus, wobei das Gehäuse (119) ein erstes Gehäuseteil (121) und ein zweites Gehäuseteil (122) umfasst, das an das erste Gehäuseteil (121) angrenzt, wobei sich durch das erste Gehäuseteil (121) zumindest eine Stufenbohrung (234) hindurcherstreckt, die einen ersten Bohrungsabschnitt (244), einen zweiten Bohrungsabschnitt (246), der einen kleineren Durchmesser als der des erste Bohrungsabschnitts (244) aufweist, und eine Ringschulter (248) zwischen den beiden Bohrungsabschnitten aufweist, wobei die Stufenbohrung (234) eine Schraube (232) mit einem Schraubenkopf (252) und einem Schraubenschaft (250) aufnimmt, deren Schraubenschaft (250) sich durch den zweiten Bohrungsabschnitt (246) erstreckt und zum Teil in eine Gewindebohrung (254) des zweiten Gehäuseteils (122) eingeschraubt ist und deren Schraubenkopf (252) sich an der Ringschulter (248) abstützt,
**dadurch gekennzeichnet,**
**dass** der erste Bohrungsabschnitt (244) ein Innengewinde (256) zur Einschraubung eines Gewindeschafts (258) zur Anbringung des ersten Gehäuseteils (121) an einer Befestigungsstruktur (262) enthält.

2. Vakuumpumpe nach Anspruch 1,
**dadurch gekennzeichnet,**
**dass** der erste Bohrungsabschnitt (244) eine Innenumfangsoberfläche aufweist, die das Innengewinde (256) ausbildet.

3. Vakuumpumpe nach Anspruch 1,
**dadurch gekennzeichnet,**
**dass** der erste Bohrungsabschnitt (244) eine Gewindehülse aufnimmt, die das Innengewinde (256) ausbildet.

4. Vakuumpumpe nach Anspruch 3,
**dadurch gekennzeichnet,**
**dass** die Gewindehülse in dem ersten Bohrungsabschnitt (244) mittels einer Schraube, insbesondere einer Madenschraube, gesichert ist, die in eine sich radial erstreckende Schrauböffnung in das erste Gehäuseteil (121) eingeschraubt ist; und/oder
**dass** die Gewindehülse in den ersten Bohrungsabschnitt (244) eingeschraubt ist, wobei sie vorzugsweise gegen den Schraubenkopf (252) der Schraube (232) verspannt ist, wobei es insbesondere vorgesehen ist, dass die Gewindehülse ein Außengewinde aufweist, mit dem sie in ein Innengewinde (256) eingeschraubt ist, das die Innenumfangsoberfläche des ersten Bohrungsabschnitts (244) ausbildet.

5. Vakuumpumpe nach zumindest einem der vorstehenden Ansprüche,
**dadurch gekennzeichnet,**
**dass** das erste Gehäuseteil (121) ein Gehäuseunterteil (121) ist und eine umlaufende Gehäusewand (236) umfasst, die sich in axialer Richtung erstreckt und eine umlaufende Stirnfläche (238) sowie eine der Stirnfläche (238) in axialer Richtung gegenüberliegende Bodenfläche (141) aufweist, die die Unterseite (141) der Vakuumpumpe (111, 230) bildet, wobei auch das zweite Gehäuseteil (122) eine umlaufende Gehäusewand (240) umfasst, die sich in axialer Richtung erstreckt und eine umlaufende Stirnfläche (242) aufweist, wobei die Stirnflächen (238, 242) der beiden Gehäuseteile (121, 122) aneinander angrenzen.

6. Vakuumpumpe nach Anspruch 5,
**dadurch gekennzeichnet,**
**dass** die zumindest eine Stufenbohrung (234) innerhalb der Gehäusewand (236) des ersten Gehäuseteils (121) ausgebildet ist und sich zwischen der Bodenfläche (141) und der Stirnfläche (238) des ersten Gehäuseteils (121) erstreckt, wobei es insbesondere vorgesehen ist, dass der erste Bohrungsabschnitt (244) in der Bodenfläche (141) und der zweite Bohrungsabschnitt (246) in der Stirnfläche (238) des ersten Gehäuseteils (121) mündet.

7. Vakuumpumpe nach zumindest einem der vorstehenden Ansprüche,
**dadurch gekennzeichnet,**
**dass** die Länge des ersten Bohrungsabschnitts (244), insbesondere die Länge des Innengewindes (256), zumindest doppelt so groß ist wie der Durchmesser des ersten Bohrungsabschnitts (244) und insbesondere etwa 2,5 bis 3 mal so groß ist wie der Durchmesser des ersten Bohrungsabschnitts (244).

8. Pumpstand mit einer Befestigungsstruktur zur Anbringung und Lagerung einer Vakuumpumpe und mit einer Vakuumpumpe (111, 230) nach zumindest einem der vorstehenden Ansprüche, wobei die Befestigungsstruktur die Vakuumpumpe (111, 230) trägt, wozu die Vakuumpumpe (111, 230) an der Befestigungsstruktur mittels zumindest einer Befestigungsschraube (260) gesichert ist, deren Gewindeschaft (258) in das Innengewinde (256) des ersten Bohrungsabschnitts (244) eingeschraubt ist.

## Claims

1. A vacuum pump (111, 230), in particular a turbomolecular pump (111, 230), comprising a housing (119) for receiving at least one pump mechanism rotatable about an axis of rotation (151), wherein the housing (119) comprises a first housing part (121) and a second housing part (122) which adjoins the first housing part (121), wherein at least one stepped bore (234) extends through the first housing part (121) and has a first bore section (244), a second bore section (246), which has a smaller diameter than that of the first bore section (244), and a ring shoulder (248) between the two bore sections, wherein the stepped bore (234) receives a screw (232) having a screw head (252) and a screw shaft (250), the screw shaft (250) of said screw (232) extending through the second bore section (246) and being partly screwed into a threaded bore (254) of the second housing part (122) and the screw head (252) of said screw (232) being supported at the ring shoulder (248),
**characterized in that**
the first bore section (244) includes an internal thread (256) for screwing in a threaded shaft (258) for attaching the first housing part (121) to a fastening structure (262).

2. A vacuum pump in accordance with claim 1,
**characterized in that**
the first bore section (244) has an inner peripheral surface which forms the internal thread (256).

3. A vacuum pump in accordance with claim 1,
**characterized in that**
the first bore section (244) receives a threaded sleeve which forms the internal thread (256).

4. A vacuum pump in accordance with claim 3,
**characterized in that**
the threaded sleeve is secured in the first bore section (244) by means of a screw, in particular a grub screw, which is screwed into a radially extending screw opening into the first housing part (121); and/or
**in that** the threaded sleeve is screwed into the first bore section (244), with said threaded sleeve preferably being braced against the screw head (252) of the screw (232), with provision in particular being made that the threaded sleeve has an external thread with which it is screwed into an internal thread (256) which forms the inner peripheral surface of the first bore section (244).

5. A vacuum pump in accordance with at least one of the preceding claims,
**characterized in that**
the first housing part (121) is a lower housing part (121) and comprises a peripheral housing wall (236) which extends in the axial direction and which has a peripheral end face (238) and a base surface (141) which is disposed opposite the end face (238) in the axial direction and which forms the lower side (141) of the vacuum pump (111, 230), with the second housing part (122) also comprising a peripheral housing wall (240) which extends in the axial direction and which has a peripheral end face (242), with the end faces (238, 242) of the two housing parts (121, 122) adjoining one another.

6. A vacuum pump in accordance with claim 5,
**characterized in that**
the at least one stepped bore (234) is formed within the housing wall (236) of the first housing part (121) and extends between the base surface (141) and the end face (238) of the first housing part (121), with provision in particular being made that the first bore section (244) ends in the base surface (141) and the second bore section (246) ends in the end face (238) of the first housing part (121).

7. A vacuum pump in accordance with at least one of the preceding claims,
**characterized in that**
the length of the first bore section (244), in particular the length of the internal thread (256), is at least twice as large as the diameter of the first bore section (244) and is in particular approximately 2.5 to 3 times as large as the diameter of the first bore section (244).

8. A pumping station comprising a fastening structure for attaching and supporting a vacuum pump, and comprising a vacuum pump (111, 230) in accordance with at least one of the preceding claims, wherein the fastening structure carries the vacuum pump (111, 230), for which purpose the vacuum pump (111, 230) is secured at the fastening structure by means of at least one fastening screw (260) whose threaded shaft (258) is screwed into the internal thread (256) of the first bore section (244).

## Revendications

1. Pompe à vide (111, 230), en particulier pompe turbomoléculaire (111, 230), comprenant un boîtier (119) destiné à recevoir au moins un mécanisme de pompage pouvant tourner autour d'un axe de rotation (151), le boîtier (119) comprenant une première partie de boîtier (121) et une deuxième partie de boîtier (122) adjacente à la première partie de boîtier (121), au moins un alésage étagé (234) s'étendant à travers la première partie de boîtier (121) et présentant une première portion d'alésage (244), une deuxième portion d'alésage (246) de diamètre inférieur à celui de la première portion d'alésage (244), et un épaulement annulaire (248) entre les deux portions d'alésage, l'alésage étagé (234) recevant une vis (232) ayant une tête de vis (252) et une tige de vis (250), dont la tige de vis (250) s'étend à travers la deuxième portion d'alésage (246) et est vissée partiellement dans un alésage taraudé (254) de la deuxième partie de boîtier (122) et dont la tête de vis (252) s'appuie contre l'épaulement annulaire (248),
**caractérisée en ce que**
la première portion d'alésage (244) comprend un taraudage (256) destiné à y visser une tige filetée (258) pour monter la première partie de boîtier (121) sur une structure de fixation (262).

2. Pompe à vide selon la revendication 1,
**caractérisée en ce que**
la première portion d'alésage (244) présente une surface périphérique intérieure qui constitue le taraudage (256).

3. Pompe à vide selon la revendication 1,
**caractérisée en ce que**
la première portion d'alésage (244) reçoit une douille à pas de vis qui constitue le taraudage (256).

4. Pompe à vide selon la revendication 3,
**caractérisée en ce que**
la douille à pas de vis est bloquée dans la première portion d'alésage (244) au moyen d'une vis, en particulier au moyen d'une vis sans tête, qui est vissée dans la première partie de boîtier (121) dans une ouverture de vissage s'étendant radialement; et/ou **en ce que**
la douille à pas de vis est vissée dans la première portion d'alésage (244), en étant de préférence serrée contre la tête de vis (252) de la vis (232), et il est prévu en particulier que la douille à pas de vis présente un filetage par lequel elle est vissée dans un taraudage (256) que constitue la surface périphérique intérieure de la première portion d'alésage (244).

5. Pompe à vide selon l'une au moins des revendications précédentes,
**caractérisée en ce que**
la première partie de boîtier (121) est une partie de boîtier inférieure (121) et comprend une paroi de boîtier périphérique (236) qui s'étend dans la direction axiale et présente une surface frontale périphérique (238) ainsi qu'une surface de fond (141) opposée à la surface frontale (238) dans la direction axiale et constituant la surface inférieure (141) de la pompe à vide (111, 230), la deuxième partie de boîtier (122) comprenant également une paroi de boîtier périphérique (240) qui s'étend dans la direction axiale et présente une surface frontale périphérique (242), les surfaces frontales (238, 242) des deux parties de boîtier (121, 122) étant adjacentes l'une à l'autre.

6. Pompe à vide selon la revendication 5,
**caractérisée en ce que**
ledit au moins un alésage étagé (234) est formé à l'intérieur de la paroi de boîtier (236) de la première partie de boîtier (121) et s'étend entre la surface de fond (141) et la surface frontale (238) de la première partie de boîtier (121), et
il est en particulier prévu que la première portion d'alésage (244) débouche dans la surface de fond (141) et que la deuxième portion d'alésage (246) débouche dans la surface frontale (238) de la première partie de boîtier (121).

7. Pompe à vide selon l'une au moins des revendications précédentes,
**caractérisée en ce que**
la longueur de la première portion d'alésage (244), en particulier la longueur du taraudage (256), est au moins deux fois plus grande que le diamètre de la première portion d'alésage (244) et en particulier environ 2,5 à 3 fois plus grande que le diamètre de la première portion d'alésage (244).

8. Poste de pompage comprenant une structure de fixation pour monter et supporter une pompe à vide et comprenant une pompe à vide (111, 230) selon l'une au moins des revendications précédentes, la structure de fixation portant la pompe à vide (111, 230), la pompe à vide (111, 230) étant à cet effet bloquée à la structure de fixation au moyen d'au moins une vis de fixation (260) dont la tige filetée (258) est vissée dans le taraudage (256) de la première portion d'alésage (244).
